# EUROPÄISCHE PATENTANMELDUNG

(11) **EP 0 737 555 A2**
(43) Veröffentlichungstag der Anmeldung: **16.10.1996**
(21) Anmeldenummer: 96105196.8
(22) Anmeldetag: 01.04.1996
(51) Int. Cl.: B29B 11/14, C08L 55/02

(54) **Verfahren zur Herstellung von Formteilen aus ABS-Kunststoff**

(30) Priorität: 12.04.1995 DE 19513901
(71) Anmelder: BAYER AG, 51368 Leverkusen (DE)
(72) Erfinder: Tischer, Werner, 41542 Dormagen (DE); Köhler, Burkhard, Dr., 51373 Leverkusen (DE); Sarabi, Bahman, Dr., 47803 Krefeld (DE)

(57) **Zusammenfassung**

Verfahren zur Herstellung von Formkörpern aus einem ABS-Kunststoff, in welchem man in einer ersten Stufe pulverförmiges Pfropfpolymerisat und gegebenenfalls SAN sowie die erforderlichen Zusätze in Anwesenheit eines Kompaktierungshilfsmittels bei 25 bis 150°C mechanisch vermischt, die Mischung zu einer zusammenhängenden Masse verpreßt, diese Masse zerkleinert und in einer zweiten Stufe durch thermoplastische Verarbeitung den Formkörper herstellt.

## Beschreibung

Für die Herstellung von Formteilen aus ABS-Kunststoffen sind im allgemeinen zwei getrennte Schritte erforderlich, nämlich die Herstellung der Formmassen aus mehreren Bestandteilen und die eigentliche thermoplastische Formgebung.

ABS-Kunststoffe sind Zweiphasenkunststoffe mit einer kontinuierlichen Phase aus einem Styrol/Acrylnitril-Copolymerisat, das auch durch andere Monomere modifiziert sein kann (im folgenden SAN) und einer in Form Kleiner diskreter Partikel eingelagerter Kautschukphase, die im allgemeinen ein Pfropfpolymerisat von Styrol und Acrylnitril (oder der anderen harzbildenden Monomeren) auf einen Kautschuk, vorzugsweise einen Dienkautschuk darstellt (im folgenden Pfropf). ABS-Kunststoffe sind seit langem bekannt und werden großtechnisch hergestellt.

Zur Herstellung der Formmasse muß man Pfropf und gegebenenfalls SAN sowie übliche Zusätze (Gleitmittel, Antistatika, Farbpigmente, Füllstoffe, Stabilisatoren) homogen vermischen. Im allgemeinen schmilzt man dazu die Polymeren zusammen mit den Zusätzen in einem geeigneten Mischaggregat, z.B. einem Kneter oder einem Extruder. Dieser Vorgang wird auch compoundieren genannt. Die homogene, compoundierte Formmasse wird wieder abgekühlt und zerteilt, z.B. granuliert und ist dann für die eigentliche thermoplastische Formgebung bereit. Hierzu wird die Formmasse wieder aufgeschmolzen, beispielsweise in einer Spritzgußmaschine oder einem Extruder und dann durch Spritzgießen oder Extrusion das Formteil hergestellt.

Das Polymer muß also zwei mal aufgeschmolzen werden, was zur Schädigung seiner Struktur und zur Verminderung seiner Qualität führen kann.

Es wurde ein Verfahren zur Herstellung von Formkörpern aus ABS-Kunststoffen gefunden, das mit geringerer thermischer Belastung des Polymeren auskommt.

Gegenstand der Erfindung ist ein Verfahren zur Herstellung von Formteilen aus ABS-Kunststoffen, in welchem man in einer ersten Stufe pulverförmiges Pfropfpolymerisat und gegebenenfalls SAN sowie die erforderlichen Zusätze in Anwesenheit eines Kompaktierungshilfsmittels bei 25 bis 150°C mechanisch vermischt, die Mischung zu einer zusammenhängenden Masse verpreßt, diese Masse zerkleinert und in einer zweiten Stufe den Formkörper durch thermoplastische Verformung herstellt.

Diese Arbeitsweise vermeidet in der ersten Stufe das Aufschmelzen der thermoplastischen Polymeren, liefert aber eine für die nachfolgende Thermoplastverarbeitung ausreichend homogene Mischung.

Voraussetzung für die Durchführbarkeit dieses Verfahrens ist die Anwesenheit eines Kompaktierungshilfsmittels. Hierfür sind Kautschuke mit einer Glastemperatur unter -10°C geeignet. Beispiele sind Nitrilkautschuke (NBR), d.h. Copolymerisate von Acrylnitril und Butadien, wie sie in Römpps Chemie-Lexikon, 8. Aufl., Seite 2808 beschrieben sind;
säurefunktionelle Nitrilkautschuke, die durch Copolymerisation von Acrylnitril, Butadien und ungesättigten Säuren, wie z.B. Fumarsäure, Acrylsäure oder Methacrylsäure, erhältlich sind;
Polyisobutylen (PIB), Römpps Chemie-Lexikon, 8. Aufl., Seite 3294, oder Butylkautschuk (IIR), Römpps Chemie-Lexikon, 8. Aufl., Seite 547, der auch nachträglich chloriert oder bromiert sein kann;
Styrol-Butadien-Copolymerisate (SBR), Römpps Chemie-Lexikon, 8. Aufl., Seite 4029; Styrol-Isopren-Copolymerisate und die entsprechenden hydrierten Copolymerisate;
Ethylen-Vinylacetat-Copolymerisate (EVA), Römpps Chemie-Lexikon, 8. Aufl., Seite 1217, sowie verseifte oder teilverseifte EVA-Copolymerisate;
Polybutadiene, Römpps Chemie-Lexikon, 8. Aufl., Seite 3280 oder Polyisoprene, Seite 3294;
Polychloropren, Römpps Chemie-Lexikon, 8. Aufl., Seite 3281;
Polynorbornen mit einem Zusatz von Mineralöl, so daß die Tg <-10°C ist, Römpps Chemie-Lexikon, 8. Aufl., Seite 3306;
Polyoctenamer, Römpps Chemie-Lexikon, 8. Aufl., Seite 3307;
Thioplaste, Römpps Chemie-Lexikon, 8. Aufl., Seite 4247;
Ethylen-Propylen-Kautschuk, Römpps Chemie-Lexikon, 8. Aufl., Seite 1157 und EPDM, Seite 1154;
Polyurethane, Römpps Chemie-Lexikon, 8. Aufl., Seite 3318 und alle unter dem Stichwort "Kautschuk" in Römpps Chemie-Lexikon, 8. Aufl., Seite 2064-2069, aufgeführten Polymere.

Vorzugsweise werden NBR, besonders bevorzugt säurefunktionelle Nitrilkautschuke, oder PIB-Kautschuke eingesetzt. Es können auch Gemische der genannten Kautschuke, vorzugsweise mit säurefunktionellem Nitrilkautschuk als Komponente, eingesetzt werden.

Die Kautschuke werden in Mengen von 1 bis 10 Gew.-Teilen pro 100 Gew.-Teile Pfropfpolymerisat plus SAN eingesetzt.

Die erste Stufe des erfindungsgemäßen Verfahrens wird in bekannten sogenannten Kompaktoren durchgeführt. Geeignet ist beispielsweise eine Kompaktier/Granuliermaschine WP 50 N/75 der Firma Alexanderwerk AG, Remscheid.

Diese Vorrichtungen vermeiden nicht nur das Ausschmelzen der Polymerisate, sondern verfügen auch über einen erheblich größeren Durchsatz als Kneter etwa gleicher Größe.

## Patentansprüche

1. Verfahren zur Herstellung von Formkörpern aus einem ABS-Kunststoff; in welchem man in einer ersten Stufe pulverförmiges Pfropfpolymerisat und gegebenenfalls SAN sowie die erforderlichen Zusätze in Anwesenheit eines Kompaktierungshilfsmittels bei 25 bis 150°C mechanisch vermischt, die Mischung zu einer zusammenhängenden Masse verpreßt, diese Masse zerkleinert und in einer zweiten Stufe durch thermoplastische Verarbeitung den Formkörper herstellt.

2. Verfahren nach Anspruch 1, worin man als Kompaktierungshilfsmittel 1 bis 10 Gew.-Teile pro 100 Gew.-Teile Pfropfpolymerisat und gegebenenfalls SAN eines Kautschuks mit einer Glastemperatur von unter -10°C verwendet.
